Europäisches Patentamt

(19) European Patent Office

Office européen des brevets

(11) Veröffentlichungsnummer: **0 064 612**
**B1**

(12) **EUROPÄISCHE PATENTSCHRIFT**

(45) Veröffentlichungstag der Patentschrift:
29.08.84

(21) Anmeldenummer: **82103207.5**

(22) Anmeldetag: **16.04.82**

(51) Int. Cl.³: **F 16 H 37/08**

(54) Getriebe für Kraftfahrzeuge.

(30) Priorität: **07.05.81 DE 3118075**

(43) Veröffentlichungstag der Anmeldung:
**17.11.82 Patentblatt 82/46**

(45) Bekanntmachung des Hinweises auf die Patenterteilung:
**29.08.84 Patentblatt 84/35**

(84) Benannte Vertragsstaaten:
**DE FR GB IT**

(56) Entgegenhaltungen:
**EP - A - 0 004 487**
**DE - B - 1 127 133**
**FR - A - 1 268 226**

(73) Patentinhaber: **AUDI NSU AUTO UNION AKTIENGESELLSCHAFT, Felix-Wankelstrasse, D-7107 Neckarsulm (DE)**

(72) Erfinder: **Höhn, Bernd-Robert, Dr., Mühlweg 10a, D-8073 Kösching (DE)**

(74) Vertreter: **Le Vrang, Klaus, AUDI NSU AUTO UNION Aktiengesellschaft Postfach 220 Patentabteilung, D-8070 Ingolstadt (DE)**

## Beschreibung

Die Erfindung betrifft ein Getriebe für Kraftfahrzeuge gemäß dem Oberbegriff des Patentanspruches 1.

Ein derartiges Getriebe ist durch die DE-B-1 127 133 bekanntgeworden. Es setzt sich aus einem mit mehreren Vorwärtsgängen und einem Rückwärtsgang ausgestatteten Zahnräder-Wechselgetriebe und einem parallel geschalteten Kegelscheiben-Umschlingungsgetriebe zusammen. Das Umschlingungsgetriebe wirkt als extremer Langsamfahrgang, wobei das Abtriebsscheibenpaar über eine weitere Zahnräder-Untersetzungsstufe ein Differential antreibt. Auch das Zahnräder-Wechselgetriebe wird unmittelbar von einer Eingangswelle angetrieben und leitet den Antriebsfluß erst über ein zusätzliches Zwischenzahnrad auf das Differential.

Daraus ergibt sich ein relativ groß bauendes, aufwendiges Getriebe mit vielen Zwischenwellen und zusätzlichen Zahneingriffen, welche den Übertragungs-Wirkungsgrad des Getriebes verschlechtern.

Ein weiteres Getriebe mit einem Zahnräder-Wechselgetriebe und einem Kegelscheiben-Umschlingungsgetriebe ist in der EP-A-4 487 dargestellt. Die Leistungszuführung zum Getriebe ist durch mehrere Antriebswellen gebildet, die koaxial übereinander angeordnet sind und ein Zahnrad für das Wechselgetriebe sowie das Antriebsscheibenpaar des Umschlingungsgetriebes aufnehmen. Die Antriebswellen werden mit der Brennkraftmaschine mittels hydraulisch betätigter Kupplungen verbunden. Zusätzlich werden der Vorwärtsgang, der als erster Gang ausgebildet sein kann, und der Rückwärtsgang mittels einer Zahnkupplung geschaltet.

Das Getriebe erfordert somit eine mechanische und eine hydraulische Schaltung, wodurch sich im Hinblick auf die koaxial übereinander angeordneten Antriebswellen ein ebenfalls komplizierter Getriebeaufbau ergibt.

Schließlich zeigt die FR-A-1 268 226 einen aus Umschlingungsgetriebe und einem Zahnradgetriebe gebildeten Antriebsblock, mit dem entweder ein regelbarer Arbeitsantrieb oder ein Schnellantrieb über Lamellenkupplungen schaltbar ist.

Aufgabe der Erfindung ist es, ein im Wirkungsgrad günstigeres, weniger aufwendiges und montagefreundliches Getriebe der gattungsgemäßen Art zu schaffen.

Diese Aufgabe wird erfindungsgemäß mit den kennzeichnenden Merkmalen des Patentanspruches 1 gelöst. Das erfindungsgemäße Getriebe weist einen unkomplizierten Aufbau auf, da keine koaxial übereinander angeordneten Wellen oder zusätzliche Zwischenwellen verbaut sind. Da das Getriebe nur eine Vorgelegewelle für den Vorwärtsfahrbereich aufweist, sind weniger Zahneingriffe im Untersetzungsbereich verwirklicht; zusätzlich ist der Getriebeaufbau vereinfacht und dessen Bauraum verringert.

Zweckmäßige Weiterbildungen der Erfindung sind den Merkmalen der Patentansprüche 2 bis 8 entnehmbar.

Die Erfindung ist im folgenden anhand eines Ausführungsbeispieles mit weiteren Einzelheiten näher erläutert. Die Zeichnung zeigt in

Fig. 1 einen schematischen Längsschnitt durch ein erfindungsgemäßes Getriebe, wobei die Vorgelegewelle aus der in der Fig. 2 ersichtlichen tatsächlichen Lage in die Schnittebene geschwenkt ist;

Fig. 2 eine Ansicht in Richtung des Pfeiles X der Fig. 1.

Die Figuren zeigen ein Getriebe für Kraftfahrzeuge, mit einem Gehäuse 2, in dem ein Untersetzungsgetriebe 4, ein Kegelscheiben-Umschlingungsgetriebe 6 und ein Differential 8 mit Querabtrieb angeordnet sind.

Das Getriebegehäuse besteht aus einem Gehäuse 10 mit einer mittleren Wand 12, die das Gehäuse 10 in zwei Räume 14, 16 unterteilt. An das Gehäuse 10 ist eine Kupplungsglocke 18 angeformt.

Der Raum 14 ist durch einen vorderen Deckel 20 und der Raum 16 durch einen hinteren Deckel 22 abgeschlossen. Im Getriebegehäuse 10 ist eine Antriebswelle 24 gelagert, welche über eine nur angedeutet dargestellte Trockenreibungskupplung 26 mit einer nicht dargestellten Brennkraftmaschine kuppelbar ist. Auf der Antriebswelle 24 sind zwei Zahnräder 26, 28 befestigt, die im ständigen Eingriff mit auf einer Vorgelegewelle 30 gelagerten Zahnrädern 32, 34 sind. Die Zahnräder 32, 34 sind mittels einer Synchronisierkupplung 36 mit der Vorgelegewelle 30 kuppelbar und bilden bei Kupplung des Zahnrades 32 zusammen mit dem Zahnrad 26 einen ersten Vorwärtsgang und bei Kupplung des Zahnrades 34 mit dem Zahnrad 28 einen zweiten Vorwärtsgang des Untersetzungsgetriebes 4.

Auf der Schiebemuffe 38 der Synchronisierkupplung 36 ist noch ein weiteres Zahnrad 40 ausgebildet, welches mit einem auf der Antriebswelle 24 befestigten Zahnrad 42 und einem im Gehäuse 10 verschiebbar gelagerten Rückwärtsgang-Zahnrad 44 einen Rückwärtsgang ergibt.

An der Vorgelegewelle 30 ist weiter ein Festzahnrad 46 angeordnet. Das Festzahnrad 46 liegt innerhalb einer in dem Raum 16 ragenden Ausbuchtung 48 der mittleren Wand 12 und ist über eine Ausnehmung 50 in der Ausbuchtung 48 mit einem Festzahnrad 52 in Eingriff. Das Festzahnrad 52 ist auf einer Abtriebswelle 54 befestigt.

Die Abtriebswelle 54 ist mittels eines Radiallagers 56, beispielsweise einem Rollenlager, in der mittleren Wand 12 gelagert und trägt an ihrem in den Raum 14 ragenden Ende ein Antriebsritzel 58. Das Antriebsritzel 58 ist mit dem Tellerrad 60 des Differentiales 8 in Eingriff.

Innerhalb des Raumes 16 trägt die Abtriebswelle 54 das Abtriebsscheibenpaar 62 des Umschlingungsgetriebes 6 und ist über ein radial und axial wirkendes Lager 64, beispielsweise einem Kugellager, in dem Deckel 22 geführt. Das Abtriebsscheibenpaar 62 bildet zusammen mit der Kette 66 und dem Antriebsscheibenpaar 68 das Kegelscheiben-Umschlingungsgetriebe 6, mit dem durch Verstellen jeweils einer Scheibe eine stufenlose Übersetzung mit einem Übersetzungsbereich R = 3 einstellbar ist. Die nähere Funktion des Kegelscheiben-Umschlingungsgetriebes 6 ist nicht Gegenstand der Erfindung und deshalb auch nicht näher erläutert.

Das Antriebsscheibenpaar 68 sitzt auf einem hinteren Abschnitt 24a der Antriebswelle 24 und trägt an der Festscheibe 68a eine Kupplungsverzahnung 70, die zusammen mit der Schiebemuffe 72 auf der Antriebswelle 24 eine Synchronisierkupplung 74 bildet.

Die Antriebswelle 24 bzw. deren vorderer Abschnitt und die Vorgelegewelle 30 sind in der mittleren Wand 12 über jeweils ein Radiallager 76, 78 und im Deckel 20 über ein Radial- und Axiallager 80, 82 gelagert. Der hintere Abschnitt 24a der Antriebswelle ist über ein Radial- und Axiallager 84 im hinteren Deckel 22 aufgenommen, während der vordere Abschnitt der Antriebswelle 24 und der hintere Abschnitt 24a unter Zwischenfügung eines Nadellagers 86 teleskopisch ineinander gelagert sind.

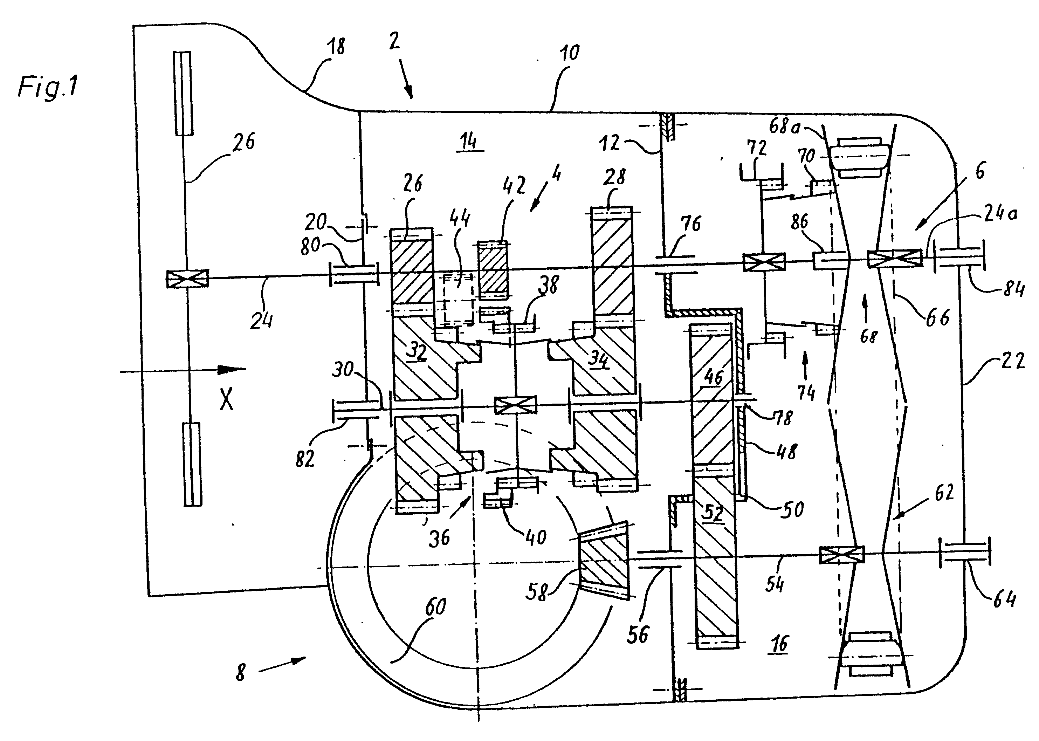

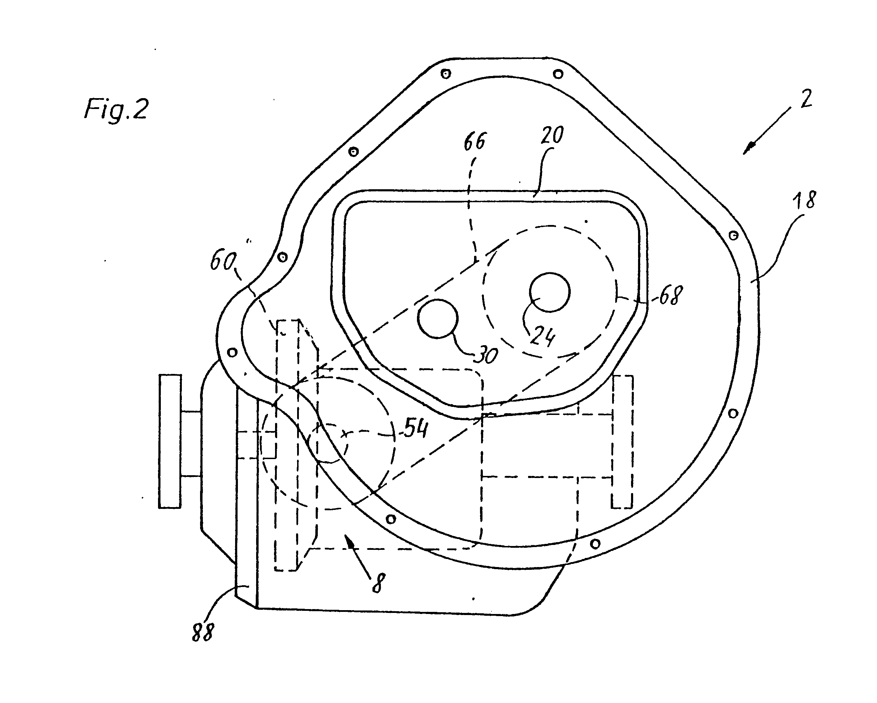

Wie aus der Zeichnung ersichtlich ist, ist das Kegelscheiben-Umschlingungsgetriebe 6 in dem Raum 16 angeordnet, während das Untersetzungsgetriebe 4 und das Differential 8 gemeinsam in dem Raum 14 des Getriebegehäuses 2 liegen. Die Fig. 2 zeigt das Getriebe in der Ansicht X der Fig. 1, die auch der Einbaulage des Getriebes im Kraftfahrzeug entspricht. Wie der Fig. 2 entnehmbar ist, ist die Vorgelegewelle 30 im wesentlichen horizontal neben der Antriebswelle 24 angeordnet. Die Abtriebswelle 54 liegt unterhalb der Vorgelegewelle und ist in horizontaler Richtung gesehen weiter von der Antriebswelle 24 entfernt als die Vorgelegewelle 30. Dadurch ist es möglich, das Tellerrad 60 des Differentiales 8 so hoch zu legen, daß die Bodenfreiheit des Kraftfahrzeuges nicht eingeschränkt wird.

Die Montage des dargestellten Getriebes kann folgendermaßen vorgenommen werden:

An dem vorderen Deckel 20 werden die Lager 80, 82, die Antriebswelle 24 mit den Zahnrädern 26, 42, 28 und die Vorgelegewelle 30 mit den Zahnrädern 32, 34 und der Synchronisierkupplung 36 vormontiert. Nach der Vorbereitung des Gehäuses 10 wird das vormontierte Untersetzungsgetriebe 4 mit dem Deckel 20 in das Gehäuse 10 eingesetzt, wobei die Antriebswelle 24 und die Vorgelegewelle 30 in die Radiallager 76, 78 eingeschoben werden. Anschließend wird die im hinteren Deckel (22) vormontierte Baueinheit Umschlingungsgetriebe 6, Abtriebswelle 54, Abschnitt 24a der Antriebswelle 24 in entgegengesetzter Richtung an das Gehäuse 10 montiert. Das Differential 8 mit dem Tellerrad 60 wird durch einen in der Fig. 2 ersichtlichen, seitlichen Deckel 88 in den Raum 14 eingebaut.

Wenn die Synchronisierkupplungen 36, 74 in der in der Fig. 1 gezeichneten Stellung sind, befindet sich das Getriebe in der Leerlaufstellung. Der erste Vorwärtsgang wird durch Verschieben der Schiebemuffe 38 auf der Zeichnung nach links und durch Kuppeln des Zahnrades 32 mit der Vorgelegewelle 30 geschaltet. Der Kraftfluß verläuft dann von der Antriebswelle 24 über die Zahnräder 26, 32, die Vorgelegewelle 30, die Festräder 46, 52, die Abtriebswelle 54 und das Antriebsritzel 58 auf das Differential 8. Der zweite Vorwärtsgang wird durch Kuppeln des Zahnrades 34 mit der Vorgelegewelle 30 eingelegt, wobei der Kraftfluß abweichend vom ersten Vorwärtsgang über die Zahnräder 28, 34 verläuft.

Durch Verschieben der Schiebemuffe 72 der Synchronisierkupplung 74 wird das Antriebsscheibenpaar 68 mit der Antriebswelle 24 gekuppelt, so daß der Kraftfluß von der Antriebswelle 24, dem Antriebsscheibenpaar 68, die Kette 66 und das Abtriebsscheibenpaar 62 auf die Abtriebswelle 54 erfolgt. Der dritte Vorwärtsgang kann stufenlos in einem Wandlungsbereich von R = 3 abhängig von der Geschwindigkeit und der Last des Kraftfahrzeuges gefahren werden. Dazu werden beispielsweise hydraulisch jeweils eine Antriebsscheibe der Antriebsscheibenpaare in bekannter Weise verstellt.

**Patentansprüche**

1. Getriebe für Kraftfahrzeuge, mit einem in einem Gehäuse (2) angeordneten Kegelscheiben-Umschlingungsgetriebe (6) mit variablem Übersetzungsverhältnis und einem Zahnräder-Wechselgetriebe (4) mit zumindest zwei Vorwärtsgängen, mit einer Welle (24, 24a), auf der abkuppelbar das Abtriebsscheibenpaar (68) des Umschlingungsgetriebes (6) sowie Zahnräder (26, 28) des Wechselgetriebes (4) sitzen, mit einer Vorgelegewelle (30) für die Gegen-Zahnräder des Wechselgetriebes und einem Festzahnrad (46), welches ein Festzahnrad (52) auf einer weiteren Welle (54) antreibt, sowie mit einem Abtriebsscheibenpaar (62), dadurch gekennzeichnet, daß

a) die die Zahnräder (26, 28) des Wechselgetriebes (4) und das Antriebsscheibenpaar (68) des Umschlingungsgetriebes (6) aufnehmende Welle die Antriebswelle (24, 24a) des Wechselgetriebes (4) ist,

b) die das Festzahnrad (52) tragende weitere Welle unmittelbar die Abtriebswelle (54) des Wechselgetriebes (4) ist, auf welcher auch das Abtriebsscheibenpaar (62) des Umschlingungsgetriebes (6) befestigt ist.

2. Getriebe nach Anspruch 1, dadurch gekennzeichnet, daß das Antriebsscheibenpaar (68) des Umschlingungsgetriebes (6) mittels einer Synchronisierkupplung (74) mit der Antriebswelle (24) kuppelbar ist.

3. Getriebe nach den Ansprüchen 1 und 2, mit einem im Gehäuse (2) integriertem Differential (8), gekennzeichnet durch die folgenden Merkmale:

a) der Abtrieb des Differentiales (8) erfolgt quer zur Antriebswelle (24) und Abtriebswelle (54);
b) die Abtriebswelle (54) treibt mit einem Abtriebsritzel (58) unmittelbar das Differential (8) an;
c) die Vorgelegewelle (30) ist im wesentlichen horizontal neben der Antriebswelle (24) angeordnet;
d) das Differential (8) liegt unterhalb der Vorgelegewelle (30), wobei die Abtriebswelle (54), das Antriebsritzel (58) und das Tellerrad (60) in horizontaler Richtung weiter von der Antriebswelle (24) entfernt sind als die Vorgelegewelle (30).

4. Getriebe nach Anspruch 3, dadurch gekennzeichnet, daß das Differential (8) und das Wechselgetriebe (4) in einem gemeinsamen Raum (14) des Gehäuses (2) liegen.

5. Getriebe nach den vorhergehenden Ansprüchen, gekennzeichnet durch die folgenden Merkmale:

a) das Gehäuse (10) weist eine mittlere Wand (12) auf, die das Getriebegehäuse (2) in zwei Räume (14, 16) unterteilt und in der die Antriebswelle (24), die Vorgelegewelle (30) und die Abtriebswelle (54) gelagert sind;
b) die Räume sind durch je einen die Antriebswelle (24) und die Vorgelegewelle (30) bzw. die Antriebswelle (24a) und die Abtriebswelle (54) aufnehmenden Deckel (20 bzw. 22) abgeschlossen;
c) der eine Raum (16) nimmt das Umschlingungsgetriebe (6) und der andere Raum (14) das Differential (8) und das Wechselgetriebe (4) auf.

6. Getriebe nach Anspruch 5, dadurch gekennzeichnet, daß

a) die Antriebswelle (24) im Bereich der mittleren Wand (12) des Gehäuses (10) einen hinteren Abschnitt (24a) aufweist,
b) die Antriebswelle (24) und der Abschnitt (24a) ineinander gelagert sind,
c) die die Antriebswelle (24) und die Vorgelegewelle (30) aufnehmenden Lager am vorderen Deckel (20) als Axial- und Radiallager (80, 82) an der mittleren Wand (12) hingegen nur als Radiallager (76, 78) ausgebildet sind.

7. Getriebe nach den Ansprüchen 5 und 6, dadurch gekennzeichnet, daß die die Abtriebswelle (54) und den Abschnitt (24a) der Antriebswelle (24) aufnehmenden Lager am hinteren Deckel (22) als Axial- und Radiallager (64, 84) und die übrigen Lager nur als Radiallager (56, 86) ausgeführt sind.

8. Getriebe nach den vorhergehenden Ansprüchen, dadurch gekennzeichnet, daß

a) die mittlere Wand (12) des Gehäuses (10) eine in den Raum (16) des Umschlingungsgetriebes (6) ragende Ausbuchtung (48) aufweist, innerhalb der das Festrad (46) der Vorgelegewelle (30) angeordnet ist,
b) das korrespondierende Festrad (52) auf der Abtriebswelle (54) in dem Raum (16) mit dem Umschlingungsgetriebe (6) liegt und
c) die beiden Festräder (46, 52) durch eine Ausnehmung (50) in der Ausbuchtung (48) miteinander in Eingriff sind.

## Claims

1. Transmission for motor vehicles, with a conical-pulley belt gear unit (6) arranged in a housing (2) and having a variable transmission ratio, and a gearwheel-type changespeed gear unit (4) having at least two forward speeds, with a shaft (24, 24a) on which there are mounted in such a manner as to be uncouplable the pair of drive pulleys (68) of the belt gear unit (6) and also gearwheels (26, 28) of the change-speed gear unit (4), with a countershaft (30) for the mating gearwheels of the change-speed gear unit, and a fixed gearwheel (46) driving a fixed gearwheel (52) on a further shaft (54), also with a pair of drive output pulleys (62), characterised in that

a) the shaft which accommodates the gearwheels (26, 28) of the change-speed gear unit (4) and the pair of drive pulleys (68) of the belt gear unit (6) is the drive shaft (24, 24a) of the change-speed gear unit (4),
b) the further shaft supporting the fixed gearwheel (52) is directly the drive output shaft (54) of the change-speed gear unit (4), on which shaft the pair of drive output pulleys (62) of the belt gear unit (6) are also secured.

2. Transmission according to claim 1, characterised in that the pair of drive pulleys (68) of the belt gear unit (6) are adapted to be coupled by means of a synchronisation coupling (74) with the drive shaft (24).

3. Transmission according to claims 1 and 2, with a differential (8) integrated in the housing (2), characterised by the following features:

a) drive output of the differential (8) is transversely relatively to the drive shaft (24) and drive output shaft (54);
b) the drive output shaft (54) with a drive output pinion (58) directly drives the differential (8);
c) the countershaft (30) is situated substantially horizontally beside the drive shaft (24);
d) the differential (8) is situated below the countershaft (30), and the drive output shaft (54), the drive pinion (58) and the bevel wheel (60) are further removed from the drive shaft (24) in the horizontal direction than the countershaft (30) is.

4. Transmission according to claim 3, characterised in that the differential (8) and the change-speed gear unit (4) are situated in a common chamber (14) of the housing (2).

5. Transmission according to the preceding claims, characterised by the following features:

a)  the housing (10) comprises a central wall (12) which subdivides the transmission housing (2) into two chambers (14, 16) and in which the drive shaft (24), the countershaft (30) and the drive output shaft (54) are mounted;

b)  the chambers are each closed by a cover (20 and 22 respectively), one of which receives the drive shaft (24) and the contershaft (30) and the other the drive shaft (24a) and the drive output shaft (54);

c)  one chamber (16) accommodates the belt gear unit (6) and the other chamber (14) accommodates the differential (8) and the change-speed gear unit (4).

6. Transmission according to claim 5, characterised in that

a)  in the region of the central wall (12) of the housing (10) the drive shaft (24) comprises a rear portion (24a),

b)  the drive shaft (24) and the shaft portion (24a) are mounted one within the other,

c)  the bearings receiving the drive shaft (24) and the countershaft (30) are constructed at the front cover (20) as axial and radial bearings (80, 82) but at the central wall (12) only as radial bearings (76, 78).

7. Transmission according to claims 5 and 6, characterised in that the bearings receiving the drive output shaft (54) and the portion (24a) of the drive shaft (24) are constructed at the rear cover (22) as axial and radial bearings (64, 84), and the other bearings only as radial bearings (56, 86).

8. Transmission according to the preceding claims, characterised in that

a)  the central wall (12) of the housing (10) has a bulge (48) which projects into the chamber (16) of the belt gear unit (6) and within which the fixed wheel (46) of the countershaft (30) is arranged,

b)  the corresponding fixed wheel (52) on the drive output shaft (54) is situated in the chamber (16) with the belt gear unit (6), and

c)  the two fixed wheels (46, 52) engage with one another through an aperture (50) in the bulge (48).

**Revendications**

1. Boîte de vitesses pour véhicules automobiles, comprenant un mécanisme à enroulement à disques coniques (6) à rapport de démultiplication variable, disposé dans un carter (2), et un engrenage à changement de vitesse à roues dentées (4) avec au moins deux vitesses de marche avant, avec un arbre (24, 24a) sur lequel sont montées, de manière découplable, la paire de disques menés (68) du mécanisme à enroulement (6), ainsi que des roues dentées (26, 28) de l'engrenage à changement de vitesse (4), avec un arbre intermédiaire (30) pour les roues conjuguées de l'engrenage à changement de vitesse et une roue dentée fixe (46) qui entraîne une roue dentée fixe (52) sur un autre arbre (54), ainsi qu'avec une paire de disques menés (62), caractérisée en ce que:

a)  l'arbre qui reçoit les roues dentées (26, 28) de l'engrenage à changement de vitesse (4) et la paire de disques menants (68) du mécanisme à enroulement (6) est l'arbre primaire (24, 24a) de l'engrenage à changement de vitesse (4),

b)  l'autre arbre qui porte la roue dentée fixe (52) est directement l'arbre de sortie (54) de l'engrenage à changement de vitesse (4), sur lequel est également fixée la paire de disques menés (62) du mécanisme à enroulement (6).

2. Boîte de vitesses selon la revendication 1, caractérisée en ce que la paire de disques menants (68) du mécanisme à enroulement (6) peut être accouplée avec l'arbre primaire (24) au moyen d'un accouplement de synchronisation (74).

3. Boîte de vitesses selon la revendication 1 ou 2, comportant un différentiel (8) intégré dans le carter (2), caractérisée en ce que:

a)  la sortie du différentiel (8) s'effectue perpendiculairement par rapport à l'arbre primaire (24) et à l'arbre de sortie (54),

b)  l'arbre de sortie (54) entraîne directement le différentiel (8) au moyen d'un pignon menant (58),

c)  l'arbre intermédiaire (30) est disposé pratiquement horizontalement à côté de l'arbre primaire (24),

d)  le différentiel (8) est situé au-dessous de l'arbre intermédiaire (30), arbre de sortie (54), le pignon menant (58) et la couronne de différentiel (60) étant plus éloignés de l'arbre primaire (24), en direction horizontale, que l'arbre intermédiaire (30).

4. Boîte de vitesses selon la revendication 3, caractérisée en ce que le différentiel (8) et l'engrenage à changement de vitesse (4) sont disposés dans une chambre commune (14) du carter (2).

5. Boîte de vitesses selon l'une quelconque des revendications 1 à 4, caractérisée en ce que:

a)  le carter (10) comporte une cloison médiane (12) qui subdivise le carter de boîte de vitesses (2) en deux chambres et dans laquelle sont montés l'arbre primaire (24), l'arbre intermédiaire (30) et l'arbre de sortie (54),

b) les chambres sont fermées chacune par un couvercle (20, 22) qui reçoit l'arbre primaire (24) et l'arbre intermédiaire (30) et, respectivement, l'arbre primaire (24a) et l'arbre de sortie (54),

c) l'une des chambres (16) loge le mécanisme à enroulement (6) et l'autre chambre (14) loge le différentiel (8) et l'engrenage à changement de vitesse (4).

6. Boîte de vitesses selon la revendication 5, caractérisée en ce que l'arbre primaire (24) présente une partie postérieure (24a) dans la région de la cloison médiane (12) du carter (10), en ce que l'arbre primaire (24) et cette partie (24a) sont montées l'une dans l'autre, et en ce que les paliers qui reçoivent l'arbre primaire (24) et l'arbre intermédiaire (30) sont réalisés sous forme de paliers axiaux et radiaux (64, 84) dans le couvercle postérieur (22), tandis que les autres paliers sont réalisés sous forme de paliers radiaux (56, 86).

7. Boîte de vitesses suivant les revendications 5 et 6, caractérisée en ce que les paliers qui reçoivent l'arbre de sortie (54) et la partie (24a) de l'arbre primaire (24) sont réalisés sous forme de paliers axiaux et radiaux (64, 84) dans le couvercle postérieur (22), et les autres paliers seulement sous forme de paliers radiaux (56, 86).

8. Boîte de vitesses selon l'une quelconque des revendications 1 à 7, caractérisée en ce que:

a) la cloison médiane (12) du carter comporte un renflement (48) qui fait saillie dans la chambre (16) du mécanisme à enroulement (6) et à l'intérieur duquel est disposée la roue fixe (46) de l'arbre intermédiaire (30),

b) la roue fixe correspondante (52) sur l'arbre de sortie (54) se trouve dans la chambre (16) qui contient le mécanisme à enroulement (6) et

c) les deux roues fixes (46, 52) sont en prise mutuelle à travers une découpure (50) dans le renflement (48).

Fig.1

0 064 612

Fig.2

0 064 612